# EUROPÄISCHE PATENTSCHRIFT

(11) **EP 1 887 348 B1**
(45) Veröffentlichungstag und Bekanntmachung des Hinweises auf die Patenterteilung: **19.12.2012**
(21) Anmeldenummer: 06115981.0
(22) Anmeldetag: 23.06.2006
(51) Int. Cl.: G01N 27/28, G01D 11/24

(54) **Tauchrohr für eine Messsonde**
Immersion pipe for measuring probe
Tuyau d'immersion pour capteur

(43) Veröffentlichungstag der Anmeldung: 13.02.2008
(73) Patentinhaber: Mettler-Toledo AG, 8606 Greifensee (CH)
(72) Erfinder: Tottewitz, Michael, 76689, Karlsdorf-Neuthard (DE); Caderas, Daniel, 8235, Lohn (CH)

(56) Entgegenhaltungen:
- EP-A- 0 372 121
- EP-A- 0 391 838
- EP-A- 0 590 290
- WO-A-2004/023127
- WO-A-2004/024353
- DE-A1- 19 723 681

## Beschreibung

Ein Tauchrohr zur Aufnahme einer Messsonde stellt einen Teil einer Messarmatur dar.

Messsonden werden zur Bestimmung verschiedener chemischer und/oder physikalischer Parameter eines Mediums eingesetzt, wie beispielsweise der Konzentration unterschiedlicher Stoffe, des pH-Werts oder der Trübung eines Mediums. Derartige Messsonden weisen häufig einen länglichen Körper beispielsweise aus Glas oder einem Kunststoff mit einem endständigen Sensorelement auf. Zum Schutz vor Beschädigungen wird eine Messsonde beim Betrieb in einer technischen Anlage in der Regel in einer Messarmatur angeordnet, wobei sowohl statische Messarmaturen als auch Wechselarmaturen mit oder ohne Behandlungskammer bekannt sind.

Bekannt sind unter anderem Messarmaturen mit Tauchrohren mit einem durchbrochenen Schutzkorb, in dem im Betrieb das Sensorelement angeordnet ist. Der Schutzkorb wird gegen das Medium hin durch einen Zapfen abgeschlossen. Der Zapfen stellt ein wichtiges Sicherheitsmerkmal da, da so selbst bei einem aus dem Medium zurückgezogenen Tauchrohr ein das Medium enthaltender Behälter gegen die Umwelt abgedichtet wird, bzw. das Sensorelement bei einer Wechselarmatur mit Behandlungskammer gereinigt, kalibriert und/oder konditioniert werden kann, ohne dass ein Behandlungsmedium aus der Wechselarmatur in das Medium oder das Medium in die Messarmatur gelangt.

Je nach Einsatzgebiet variieren die Anforderungen, die an eine Messarmatur bzw. an das darin anzuordnende Tauchrohr gestellt werden. Insbesondere für den Einsatz in der pharmazeutischen Industrie, der Lebensmittelindustrie und/oder der Biotechnologie wäre eine hygienische Messarmatur wünschenswert, in der sich bzw. auf der sich auf Grund ihrer Ausgestaltung im Wesentlichen weder Keime und/oder Bakterien ansiedeln noch Reste des Mediums ablagern, welche aber gleichzeitig sicher und einfach zu handhaben ist.

Es hat sich gezeigt, dass sich trotz Auswahl sterilisierbarer Materialien, wie beispielsweise Edelstahl oder bestimmter Kunststoffe, wie Teflon, auf Grund der Ausgestaltung Keime, Bakterien und/oder Mediumsreste am Tauchrohr und insbesondere am Schutzkorb, an den Dichtungen zwischen Schutzkorb und Messsonde und/oder den Aufnahmen für die Dichtungen ansiedeln oder ablagern können. Die Ablagerungen bzw. die Ansiedelung wird durch Taschen- und/oder Spaltbildungen begünstigt, welche am oder im Tauchrohr bereits während der technisch aufwändigen Herstellung entstehen.

In der EP 1 281 958 A2 wird eine spezielle Formdichtung für ein Tauchrohr ohne Sicherheitszapfen und mit einem am dem Medium zugewandten Ende offenen Schutzkorb offenbart. Diese Formdichtung bildet nach Einbringen der Messsonde einen Presssitz in der Öffnung und dichtet den Innenraum der Messarmatur spaltfrei zum Prozess hin ab. Das offenbarte Tauchrohr gewährleistet zwar eine spaltfreie Dichtung zwischen Prozess oder Medium und dem Innenraum der Messarmatur, allerdings kann beim Entfernen der Messsonde aus der Armatur Medium durch die Armatur aus dem Prozess austreten oder es kann auch das Sensorelement im Prozess durch auftreffende Partikel oder Verunreinigungen beschädigt oder zerstört werden, welche durch die endständige Öffnung in den Schutzkorb gelangen können.

Das Dokument WO-2004/023127 offenbart ein Tauchrohr zur Aufnahme einer Messsonde. Das Tauchrohr weist eine Hülse und ein Endstück auf. Das Endstück besteht aus einem Zapfen, einem Verbindungsstück und einem zwischen Zapfen und Verbindungsstück angeordneten Schutzkorb. Das Verbindungsstück dient zur Verbindung mit der Hülse. Der Schutzkorb weist Öffnungen auf.

Damit ergibt sich als Aufgabe die Entwicklung eines sicheren und hygienischen Tauchrohres sowie einer Messarmatur mit einem darin angeordneten Tauchrohr.

Ein Tauchrohr zur Aufnahme einer Messsonde mit einem endständigen Sensorelement weist eine Hülse und ein im Wesentlichen einstückiges Endstück auf. Das Endstück weist einen Zapfen, ein Verbindungsstück und einen zwischen Zapfen und Verbindungsstück angeordneten Schutzkorb auf. Das Endstück kann mittels des Verbindungsstücks mit der Hülse verbunden werden, wobei das Verbindungsstück einen in Relation zum Innendurchmesser des Schutzkorbs vergrösserten Innendurchmesser aufweist. Als Übergang zwischen den Elementen mit unterschiedlichen Innendurchmessern ist ein umlaufender Absatz ausgebildet, welcher entweder eine Auflage für ein bekanntes elastisches Dichtmittel, wie beispielsweise einen O-Ring darstellen kann und/oder als elastische Dichtlippe ausgestaltet sein kann.

Der Schutzkorb weist mindestens einen orthogonal zur axialen Tauchrohrachse angeordneten Durchbruch auf, wodurch im Betrieb ein Messmedium mit dem im Schutzkorb anzuordnenden Sensorelement in Kontakt gebracht werden kann.

Das Tauchrohr zeichnet sich dadurch aus, dass die im Betrieb mit dem Messmedium in Kontakt stehenden Flächen und Kanten, insbesondere die des Schutzkorbs, glatt und abgerundet ausgestaltet sind.

Damit das im Betrieb in den Schutzkorb eintretende Messmedium rasch durchströmen sowie beim Entfernen der Messarmatur aus dem Medium rasch abfliessen kann und sich keine Mediumsreste im Schutzkorb ansammeln können, ist die durch den Zapfen begrenzte Innenfläche des Schutzkorbs in mindestens einer Richtung nach aussen abfallend ausgestaltet.

Die im Wesentlichen zweiteilige Ausgestaltung des Tauchrohrs ist vorteilhaft, da so das einstückige Endstück und insbesondere der Schutzkorb mit einfachen, bekannten Verfahren hergestellt werden können und komplexe Hinterschnitte, wie sie bisher häufig zur Erzeugung von Aufnahmen für Dichtmittel benötigt wurden, überflüssig werden. Weiterhin wird ein späteres Einsetzen und/oder Ansetzen des Zapfens überflüssig, da sowohl der Schutzkorb als auch das Verbindungsstück direkt im Endstück durch Bearbeitung von seiten des Verbindungsstücks bearbeitet und ausgebildet werden können. Die abgerundeten, glatten Flächen und Kanten verhindern zudem die Ansiedlung und/oder Ablagerung von Keimen, Bakterien und Mediumsresten.

Ein erfindungsgemässes Tauchrohr zeichnet sich dadurch aus, dass die Verbindung zwischen Hülse und Endstück vorzugsweise eine stoffschlüssige Verbindung ist, welche beispielsweise durch Schweissen erzeugt wird. Eine stoffschlüssige Verbindung zwischen Hülse und Endstück ist zur Gewährleistung der Stabilität und der Dichtigkeit des Tauchrohres wichtig. Die stoffschlüssige Verbindung wird auf das verwendete Tauchrohrmaterial abgestimmt und kann beispielsweise durch Schweissen, Kleben, Löten oder auch Angiessen oder Anspritzen erzeugt werden.

In einer Ausführungsform entspricht der Aussendurchmesser des dem Endstück zugewandten Endes der Hülse in etwa dem Innendurchmesser des Verbindungsstücks, so dass die Hülse in das Verbindungsstück geschoben werden kann. Vorzugsweise weist der nicht mit dem Verbindungsstück in Kontakt stehende Teil der Hülse einen vergrösserten Aussendurchmesser auf, so dass das Tauchrohr nach dem Zusammensetzen einen im Wesentlichen einheitlichen Aussendurchmesser aufweist.

Ein Hülsenende wird derart im Verbindungsstück angeordnet, dass im Inneren des Tauchrohrs eine umlaufende Aufnahme für ein Dichtmittel entsteht, welche einerseits durch den umlaufenden Absatz zwischen Verbindungsstück und Schutzkorb und andererseits durch das Hülsenende begrenzt wird.

In einer bevorzugten Ausführungsform weist das dem Endstück zugewandte Hülsenende einen vergrösserten Innendurchmesser auf, welcher in etwa dem Innendurchmesser des Verbindungsstücks entspricht. Im zusammengesetzten Tauchrohr stossen die Enden der Hülse und des Verbindungsstücks direkt aneinander. Zur Stabilisierung und zur Ausbildung einer Aufnahme für ein Dichtmittel wird eine Innenhülse mit einem Aussendurchmesser, welcher in etwa dem Innendurchmesser des Verbindungsstücks entspricht, so im Verbindungsstück und im daran angrenzenden Ende der Hülse angeordnet, dass zwischen der Innenhülse und dem Absatz im Endstück eine umlaufende Aufnahme für ein Dichtmittel entsteht. Weiterhin kann die Innenhülse als Verbindungshilfe, Stabilisierung und/oder zur Abdichtung der Nahtstelle zwischen Endstück und Hülse dienen.

In einem weiteren Ausführungsbeispiel weist die Messarmatur eine umlaufende Dichtlippe auf, deren freies Ende als scharfe Kante ausgestaltet ist. Zwischen der Dichtlippe und einer im Tauchrohr angeordneten Messsonde ist ein Freistellwinkel α, mit α > 0°, ausgebildet.

In einem weiteren Ausführungsbeispiel weist die Messarmatur sowohl ein Dichtmittel als auch eine Dichtlippe auf. Diese Ausführung ist besonders vorteilhaft, da die Dichtlippe als zweite Dichtung und/oder als Abstreifer wirken kann, so dass beim Entfernen der Messsonde aus der Messarmatur und/oder beim Zurückziehen in eine Behandlungskammer das anhaftende Medium durch die Dichtlippe von der Messsonde abgestreift wird.

Eine Messarmatur weist ein erfindungsgemässes Tauchrohr und eine im Tauchrohr austauschbar angeordnete Messsonde auf. Die Messarmatur kann als statische Armatur oder als Wechselarmatur ausgestaltet sein.

Im Folgenden werden mehrere Ausführungsformen eines Tauchrohres und einer Messarmatur mit einem Tauchrohr anhand der Figuren 1 bis 7 beschrieben, wobei gleiche Elemente mit gleichen Bezugszeichen versehen sind. Es zeigen:
- Fig. 1: Eine in einem Behälter angeordnete Messarmatur mit einem Tauchrohr im Schnitt;
- Fig. 2: eine Seitenansicht eines Tauchrohrs mit einer Hülse und einem Endstück, welche mittels einer Innenhülse verbunden sind, im Schnitt;
- Fig. 3: eine Seitenansicht eines Tauchrohrs mit einer Hülse und einem Endstück, welche direkt miteinander verbunden sind, im Schnitt;
- Fig. 4a: eine dreidimensionale Darstellung eines Endstück mit einem Schutzkorb für eine pH-Sonde;
- Fig. 4b: eine Seitenansicht des Endstücks aus Figur 4a im Schnitt;
- Fig. 4c: einen Ausschnitt der Figur 4b im Schnitt;
- Fig. 5a: eine dreidimensionale Darstellung eines Endstück mit einem Schutzkorb für eine Leitfähigkeitssonde;
- Fig. 5b: eine Seitenansicht des Endstücks aus Figur 5a;
- Fig. 5c: eine Seitenansicht des Endstücks aus Figur 5a im Schnitt,
- Fig. 6: eine Seitenansicht eines Endstücks mit einer daran ausgebildeten Dichtlippe im Schnitt,
- Fig. 7: eine Seitenansicht eines Tauchrohrs mit einer am Endstück ausgebildeten Dichtlippe und einem weiteren Dichtmittel im Schnitt.

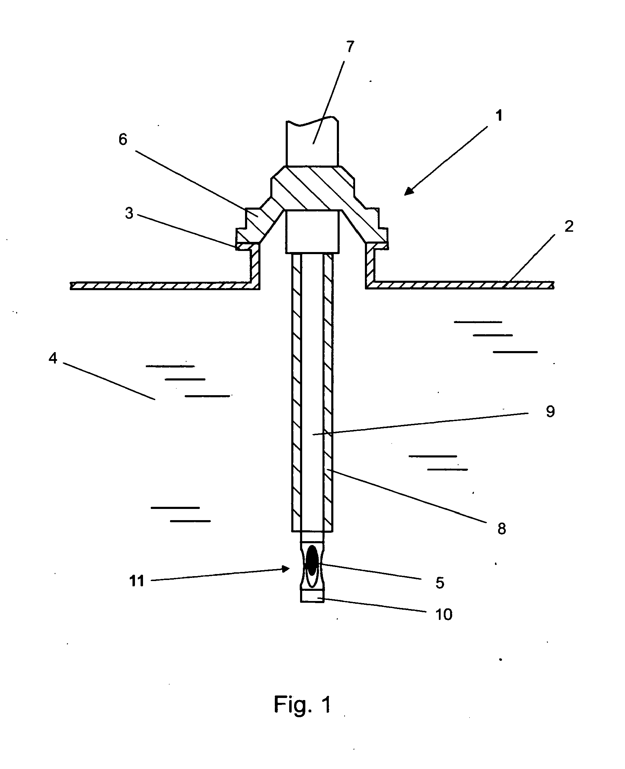

Figur 1 zeigt eine schematische Darstellung einer in einem Behälter angeordneten statischen Messarmatur 1 im Schnitt. Der Behälter ist hier nur durch einen Teil einer Wand 2 und einem in dieser Wand angeordneten Anschluss 3 angedeutet. Bei diesem Behälter kann es sich beispielsweise um eine Rohrleitung, ein Reaktionsgefäss oder einen beliebigen anderen Behälter handeln. Im Behälter befindet sich ein Messmedium 4, in das eine in der Messarmatur 1 angeordnete Messsonde 5 eintaucht. Von der Messsonde 5 ist hier nur ein endständiges Sensorelement zu sehen.

Die Messarmatur 1 besteht aus einem Prozessanschluss 6, welcher mit dem am Behälter angeordneten Anschluss 3 durch geeignete Mittel, wie zum Beispiel Klammern oder Muffen, verbunden werden kann. Es sind verschiedene, insbesondere hygienische, Prozessanschlüsse, wie zum Beispiel der Varivent-, TriClamp- oder Milchrohranschluss, bekannt und werden daher nicht näher ausgeführt

Oberhalb des Prozessanschlusses 6 und damit ausserhalb des Behälters ist ein Griff 7 angeordnet, welcher unter anderem die für den Betrieb der Messsonde 5 notwendige Elektronik aufweist. Unterhalb des Prozessanschlusses 6 und damit innerhalb des Behälters weist die Messarmatur 1 ein längliches Gehäuse 8 auf, in dem das Tauchrohr 9 und die Messsonde 5 angeordnet sind. Figur 1 zeigt beispielhaft eine statische Messarmatur 1, wobei eine vergleichbare Anordnung auch mit einer Wechselarmatur realisiert werden kann. Eine Wechselarmatur ist derart ausgestaltet, dass die Messsonde auch im Betrieb ausgewechselt werden kann.

Das Tauchrohr 9 weist an seinem dem Messmedium 4 zugewandten Ende einen durchbrochenen Schutzkorb 11 und einen massiven Zapfen 10 auf. Der Schutzkorb 11 ist derart ausgestaltet, dass er im Betrieb das Sensorelement der Messsonde 5 aufnehmen kann, so dass dieses mit dem Messmedium 4 in Kontakt treten kann.

Der in Figur 1 gezeigte Aufbau einer statischen Messarmatur entspricht im Wesentlichen dem einer bekannten Messarmatur. Neben statischen Messarmaturen 1 sind auch Wechselarmaturen bekannt, mit denen das Tauchrohr 9 und die darin angeordnete Messsonde 5 aus dem Behälter zurück gezogen werden kann, beispielsweise in eine Behandlungs- und/oder Kalibrierkammer, um dort unabhängig vom Messmedium 4 mit einem geeigneten Behandlungsmedium gespült, kalibriert und/oder konditioniert zu werden. Als Behandlungsmedium können sowohl Flüssigkeiten als auch Gase eingesetzt werden, weiterhin wäre es beispielsweise auch möglich die Behandlungskammer zu evakuieren, insbesondere um eventuellen Rückstände des Behandlungsmediums zu entfernen. Gerade im Zusammenhang mit Wechselarmaturen ist der endständig angeordnete Zapfen 10 des Tauchrohrs 9 von Bedeutung, da dieser das Gehäuse 8 der Wechselarmatur bei zurückgezogenem Tauchrohr 9 sicher verschliessen kann und so jeglichen Austausch von Medium zwischen Wechselarmatur, Behälter und Umwelt verhindert.

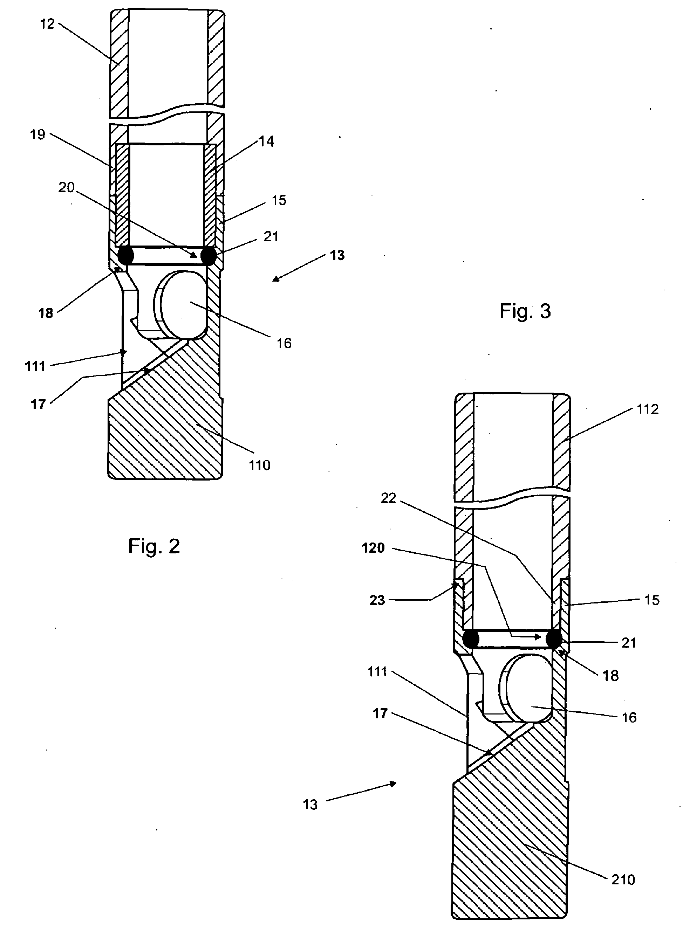

Figur 2 zeigt einen Teil eines erfindungsgemässen Tauchrohrs mit einer Hülse 12, einem Endstück 13 und einer Innenhülse 14 als Verbindungshilfe. Das in der Regel einstückige Endstück 13 weist im Wesentlichen ein Verbindungsstück 15, einen mit dem Verbindungsstück 15 verbundenen Schutzkorb 111 und endständig einen massiven Zapfen 110 auf. Bei diesem Ausführungsbeispiel wird der Schutzkorb im Wesentlichen durch drei Materialstege gebildet, welche zwischen dem Verbindungsstück 15 und dem Zapfen 110 angeordnet sind.

Das Tauchrohr kann leicht an die Dimension der einzusetzenden Messsonde angepasst werden, indem die Länge der Hülse 12 an die der Messsonde angepasst wird. Bekannt sind unter anderem Messsonden mit einer Länge von 120 mm, sowie solche mit Längen zwischen 225 und 425 mm. Der Aussendurchmesser der Messsonden ist in der Regel standardisiert, so dass gleichförmige Hülsen 12 in unterschiedlichen Längen mit geeigneten Endstücken verbunden werden können. Dieser modulare Aufbau der Tauchrohre vereinfacht und optimiert deren Herstellung.

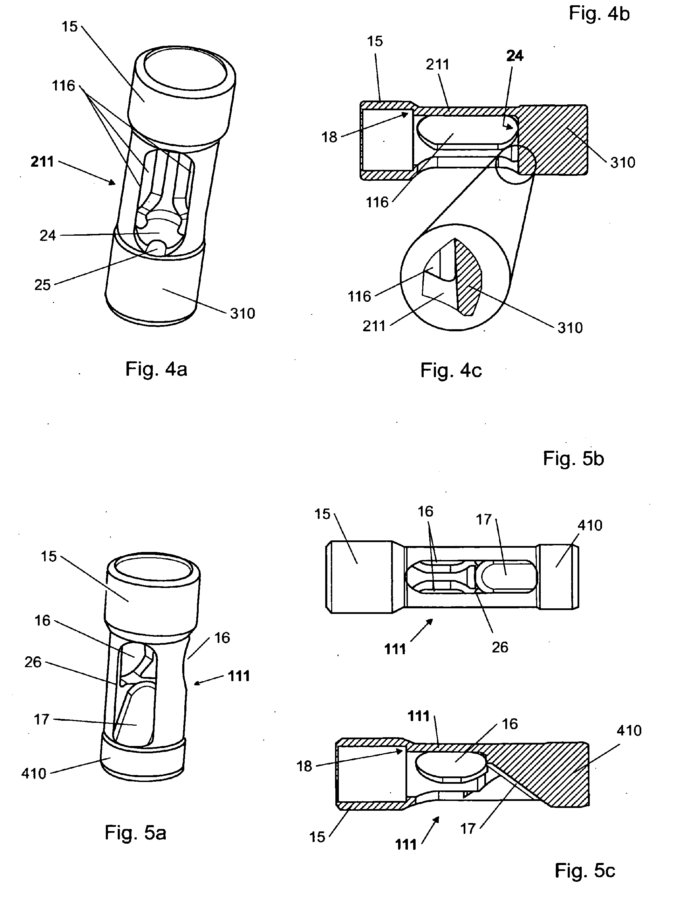

Der Schutzkorb 111 weist mindestens einen Durchbruch 16 auf, sowie eine nach aussen abfallende schräge Ebene 17. Ein derartig ausgestalteter Schutzkorb wird vor allem in Kombination mit optischen Sensoren, wie beispielsweise Trübungssensoren oder optischen Gassensoren eingesetzt und wird in den Figuren 5a bis 5d näher beschrieben.

Das Verbindungsstück 15 weist einen im Vergleich zum Schutzkorb 111 erweiterten Innendurchmesser auf, so dass ein umlaufender Absatz 18 ausgebildet wird. Die Hülse 12 weist ebenfalls an ihrem dem Endstück 13 zugewandten Ende 19 einen erweiterten Innendurchmesser auf, welcher im Wesentlichen dem Innendurchmesser des Verbindungsstücks 15 entspricht.

Die Bereiche mit erweiterten Innendurchmessern, das Verbindungsstück 15 und das Ende 18 der Hülse 12, bilden eine Aufnahme für die Innenhülse 14, deren Aussendurchmesser dem Innendurchmesser des Verbindungsstücks 15 entspricht und dessen Innendurchmesser dem Innendurchmesser der restlichen Hülse 12 und des Schutzkorbs 111 entspricht. Die Innenhülse 14 ist etwas kürzer als die longitudinale Ausdehnung dieser Aufnahme, so dass am dem Endstück 13 zugewandten Ende eine weitere Aufnahme 20 verbleibt, welche durch den Absatz 18 und die Innenhülse 14 begrenzt wird und zur Aufnahme eines Dichtmittels 21, insbesondere eines O-Rings, dient.

Das Dichtmittel 21 dichtet das Innere des Tauchrohres gegen das den Schutzkorb durchströmende Messmedium ab.

Die freien Enden des Verbindungsstücks 15 und das Ende des Tauchrohrs 19 grenzen direkt aneinander und werden durch geeignete Verfahren, wie beispielsweise Schweissen, stoffschlüssig miteinander verbunden. Die Innenhülse 14 dient sowohl zur Verstärkung der Tauchrohrwand als auch als Verbindungsmittel, zur einfachen Verbindung der Hülse 12 mit dem Endstück 13. Weiterhin dichtet die Innenhülse 14 die Verbindungsnaht zwischen dem Hülsenende 19 und dem Verbindungsstück 15 gegen das Tauchrohrinnere ab.

Figur 3 zeigt eine weitere Ausführungsform eines aus einem Endstück 13 und einer Hülse 112 bestehenden Tauchrohres. Das Endstück 13 entspricht im Wesentlichen dem aus Figur 2 und wird daher nicht näher beschrieben, wobei das gezeigte Endstück einen im Vergleich zu Figur 2 verlängerten Zapfen 210 aufweist.

Die Hülse 112 weist einen gleichförmigen Innendurchmesser auf. Zur Verbindung der Hülse 112 mit dem Verbindungsstück 15 weist das Ende 22 der Hülse 112 einen verringerten Aussendurchmesser auf, so dass ein aussen umlaufender Absatz 23 ausgebildet wird. Der Aussendurchmesser des Hülsenendes 22 entspricht im Wesentlichen dem Innendurchmesser des Verbindungsstücks 15, so dass das Verbindungsstück 15 das Hülsenende 22 aufnehmen kann. Das freie Ende des Verbindungsstücks 15 stösst an den Absatz 23 an. Die Länge des im Durchmesser verringerten Hülsenendes 22 ist etwas kürzer als das Verbindungsstück 15, so dass zwischen dem Hülsende 22 und dem Absatz 18 eine Aufnahme 120 für ein Dichtmittel 21 ausgebildet wird. Das Hülsenende 22 und das Verbindungsstück 15 werden durch ein an das verwendete Material angepasstes Verfahren stoffschlüssig verbunden.

Die in den Figuren 2 und 3 gezeigten Tauchrohre weisen beide eine stoffschlüssige Verbindung zwischen Endstück und Hülse auf. Aufgrund der mehrteiligen Ausgestaltung, kann vor allem die Aufnahme für das Dichtmittel sehr präzise und einfach ausgearbeitet werden, ohne dass wie bei den bekannten Tauchrohren mit Zapfen komplexe Hinterschnitte notwendig sind, indem beispielsweise sowohl die Hülse, als auch das Endstück entsprechend gefräst werden.

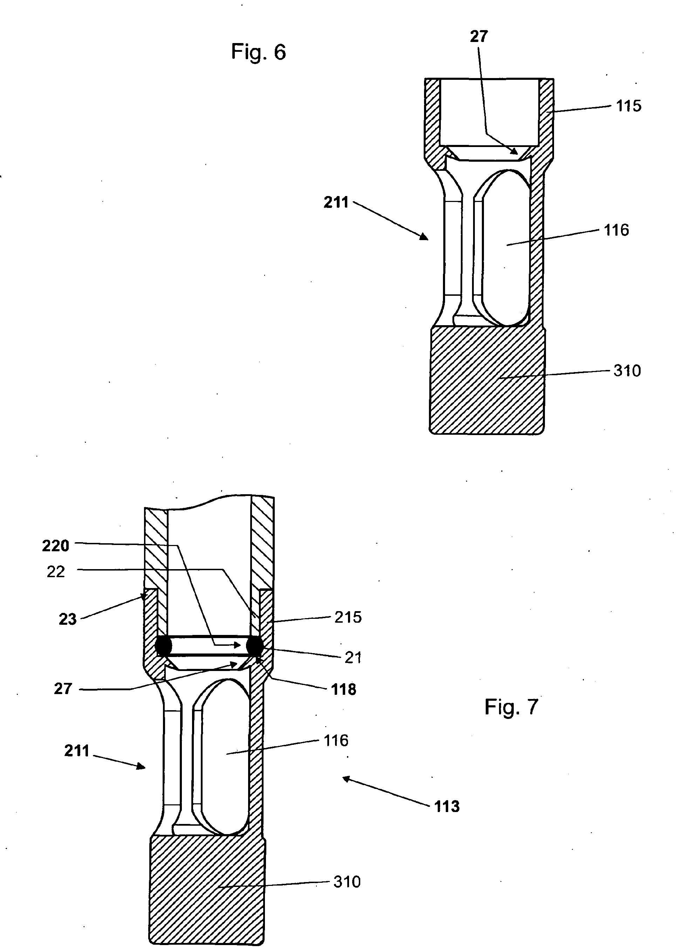

Die Figuren 4 bis 6 zeigen verschiedene Ausführungsformen des Endstücks im Detail. Die Figuren 4a-c zeigen ein Endstück zur Aufnahme von z. B. einer pH-Messsonde und in den Figuren 5a-c ist ein Endstück zur Aufnahme von z. B. einem Trübungssensor gezeigt. Figur 6 zeigt ein Endstück mit einer daran ausgebildeten, umlaufenden elastischen Dichtlippe. Die Figuren 4a-c werden im Folgenden weitestgehend gemeinsam beschrieben, dasselbe gilt für die Figuren 5a-c. Das Endstück kann unabhängig von der Hülse gefertigt werden. Aufgrund des in Relation zur Gesamtlänge des Tauchrohrs kurzen Verbindungsstückes kann der Schutzkorb einfach und mit hoher Präzision hergestellt werden und alle Kanten optimal abgerundet ausgestaltet werden. Weiterhin ist es möglich, das Endstück einstückig auszugestalten, so dass ein nachträgliches Anfügen und/oder Einpassen des Zapfens und eine damit verbundene undefinierte Spaltbildung zwischen Tauchrohrwand und Zapfen vermieden wird. Der Zapfen kann je nach Einsatzgebiet unterschiedlich lang ausgestaltet sein.

Figur 4a zeigt eine dreidimensionale Ansicht eines einstückig ausgebildeten Endstücks. Das Endstück weist einen Zapfen 310, einen mit dem Zapfen 310 verbundenen Schutzkorb 211 und ein mit dem Schutzkorb 211 verbundenes Verbindungsstück 15 auf.

Der Schutzkorb 211 weist hier drei Durchbrüche 116 auf, welche orthogonal zur Längsachse des Tauchrohres sowie mit im Wesentlichen gleichem Abstand zueinander angeordnet sind. Die Durchbrüche 116 haben eine im Wesentlichen elliptische Form und weisen abgerundete Kanten auf (s. a. Figur 4c).

Der Zapfen 310 begrenzt den Schutzkorb 211, wobei die Grenzfläche 24 leicht gewölbt und nach aussen abfallend ausgestaltet ist, so dass das in den Schutzkorb 211 eintretende Messmedium leicht abfliessen und/oder durchfliessen kann und sich nicht im Schutzkorb sammelt und/oder festsetzt. Zusätzlich zur Wölbung weist die Grenzfläche 24 stärker nach aussen abfallende Abflüsse 25 auf, welche mittig zu den Durchbrüchen 116 angeordnet sind. Sämtliche Kanten im Schutzkorb 211 sind abgerundet, so dass sich das Messmedium nicht festsetzen oder ablagern kann und ein Wachstum von beispielsweise Bakterien oder andere Ablagerungen im Wesentlichen vermindert werden.

Das Verbindungsstück 15 weist wiederum einen im Vergleich zum Schutzkorb 211 vergrösserten Innendurchmesser auf und kann stoffschlüssig mit einer Hülse (s. Figuren 1 bis 3) verbunden werden.

Die unterschiedlichen Innendurchmesser des Verbindungsstücks 15 und des Schutzkorbs 211 werden in der in Figur 4b gezeigten Schnittzeichnung verdeutlicht. In dieser Ansicht ist auch der umlaufende Absatz 18, welcher zwischen dem Verbindungsstück 15 und dem Schutzkorb 211 ausgebildet ist, erkennbar. Der Absatz 18 stellt einen Teil der Aufnahme für das Dichtmittel dar (s. Figuren 2 und 3).

Figur 4c stellt eine Detailvergrösserung von Figur 4b dar und zeigt die abgerundeten Kanten eines Durchbruchs 116 in der Nähe des Zapfens 310.

Figur 5a zeigt eine dreidimensionale Ansicht des bereits in den Figuren 2 und 3 gezeigten Endstücks, wobei der Zapfen 410 eine andere Länge hat. Der Schutzkorb 111 weist in diesem Ausführungsbeispiel drei Durchbrüche 16, 26 auf, welche orthogonal zur Tauchrohrachse angeordnet sind. Der Durchbruch 26 hat eine elliptische Form, wobei seine Längsachse nahezu die gesamte Länge des Schutzkorbs 111 einnimmt. Dieser Durchbruch 26 gibt den Blick frei auf eine zum Durchbruch 26 und nach aussen hin abfallend ausgestaltete schräge Ebene 17. Die weiteren Durchbrüche 16 sind ebenfalls elliptisch und etwas kleiner ausgestaltet als der Durchbruch 26.

Figur 5b zeigt das Endstück aus Figur 5a in einer Seitenansicht und Figur 5c dasselbe Endstück im Schnitt. In Figur 5b wird wiederum der umlaufende Absatz 18 zwischen dem Verbindungsstück 15 und dem Schutzkorb 111 sichtbar.

Die in den Figuren 4 und 5 gezeigten Endstücke können sowohl die in Figur 2 oder auch die in Figur 3 gezeigten Verbindungsstücke aufweisen und über diese mit einer Hülse verbunden werden.

Die nachträgliche Verbindung von Hülse und Endstück vereinfacht die Herstellung von Tauchrohren mit einem Zapfen erheblich, da so das Endstück einstückig ausgearbeitet werden kann. Der komplexe Schutzkorb kann in unterschiedlichen Varianten mit abgerundeten Kanten hergestellt werden und die Aufnahme für das Dichtmittel wird allein durch die Verbindung von Hülse und Endstück erzeugt, so dass komplexe Hinterschnitte und undefinierte Spalten vermieden werden können.

Figur 6 zeigt ein Endstück mit einer zwischen einem Verbindungsstück 115 und einem Schutzkorb 21 umlaufend ausgebildeten Dichtlippe 27. Diese Ausführungsform ist vorteilhaft, wenn das Endstück aus einem Kunststoff, wie beispielsweise Teflon, PVDF, PTFE oder PP, besteht. In diesem Fall kann das Endstück und die Dichtlippe 27 direkt bei der Herstellung einstückig ausgebildet werden. Wird eine Messsonde im Tauchrohr angeordnet, so presst sich die Dichtlippe 27 an den Körper der Messsonde und dichtet so das Innere der Hülse gegen den Schutzkorb 21 und ein Messmedium ab. Damit die Dichtlippe 27 für eine auch für hygienische Anwendung ausreichende Dichtigkeit zwischen Tauchrohr und Messsonde sorgt, ist es vorteilhaft, wenn die Dichtlippe 27 so ausgebildet ist, dass sie in einer scharfen Kante endet, also einen kleinen Schneidwinkel β aufweist. Zusätzlich sollte der Freistellwinkel α zwischen Messsonde und Dichtlippe 27 grösser als 0° sein, damit bei eingesetzter Messsonde stets die scharfe Kante am Körper der Messsonde dicht anliegt. Dadurch wird vermieden, dass sich zwischen dem Körper der Messsonde und der Dichtlippe ein Ringspalt bildet, in welchem sich Ablagerungen festsetzen können. Ein derartiges Endstück kann mit beiden Hülsenvarianten, wie sie in den Figuren 2 und 3 gezeigt, sind verbunden werden. Bei Verwendung einer Innenhülse, kann diese so ausgebildet sein, dass sie passgenau in die Aufnahme zwischen Hülse und Verbindungsstück eingesetzt werden kann.

In Figur 7 ist ein Tauchrohr mit einem eine Dichtlippe 27 aufweisendem Endstück 113 und einem weiteren Dichtmittel 21 gezeigt. Die Dichtlippe 27 ist umlaufend innen am dem Schutzkorb 21 zugewandten Ende des Verbindungsstücks 215 angeordnet und weist im Wesentlichen dieselben Merkmale auf, wie die bereits in Figur 6 beschriebene Dichtlippe. Bezogen auf die Zeichnung weist dass Verbindungsstück 215 oberhalb der Dichtlippe 27 einen Absatz 118 auf, welcher einen Teil einer Aufnahme 220 für das Dichtmittel 21 darstellt. Die Aufnahme 220 für das Dichtmittel 21 entspricht im Wesentlichen der bereits in Figur 3 gezeigten. Die in Figur 7 gezeigte Ausführungsform ist vorteilhaft, da hier ein fest mit dem Endstück 113 verbundenes Dichtmittel in Form einer Dichtlippe 27 durch ein austauschbares Dichtmittel 21 ergänzt wird. Das Innere des Tauchrohres und damit die Messsonde werden doppelt gegen ein Eindringen des Mediums geschützt. Zusätzlich wirkt die Dichtlippe 27 in diesem Ausführungsbeispiel als Abstreifer, so dass beim Entfernen der Messsonde aus der Messarmatur und/oder beim Zurückziehen in eine Behandlungskammer, insbesondere bei einer Wechselarmatur, das an der Messsonde haftende Medium entfernt wird.

Neben den gezeigten Ausführungsformen, können auch Endstücke mit anderen bekannten Schutzkörben ausgestaltet werden. Das Endstück und die Hülse können in den aufgezeigten Varianten miteinander verbunden werden, wobei insbesondere die in den Figuren 6 und 7 gezeigten Varianten für ein Tauchrohr aus einem Kunststoff geeignet ist. Je nach Ausgestaltung des mit dem Verbindungsstück zu verbindenden Hülsenendes kann eine Innenhülse verwendet werden oder die Hülse direkt mit dem Endstück verbunden werden.

### Bezugszeichenliste

- 1: Messarmatur
- 2: Behälterwand
- 3: Anschluss
- 4: Messmedium
- 5: Messsonde
- 6: Prozessanschluss
- 7: Griff
- 8: Gehäuse
- 9: Tauchrohr
- 10,110,210,310,410: Zapfen
- 11, 111, 211: Schutzkorb
- 12, 112: Hülse
- 13, 113: Endstück
- 14: Innenhülse
- 15, 115, 215: Verbindungsstück
- 16, 116: Durchbruch
- 17: schräge Ebene
- 18,118: Absatz
- 19: Hülsenende
- 20, 120, 220: Aufnahme
- 21: Dichtmittel
- 22: Hülsenende
- 23: Absatz
- 24: Grenzfläche
- 25: Abfluss
- 26: Durchbruch
- 27: Dichtlippe

## Patentansprüche

1. Tauchrohr zur Aufnahme einer Messsonde mit einem endständigen Sensorelement (5); wobei das Tauchrohr eine Hülse (12,112) und ein Endstück (13,113) aufweist, welches im Wesentlichen einen Zapfen (10, 110, 210, 310, 410), ein Verbindungsstück (15,115,215) und einen zwischen Zapfen (10, 110, 210, 310, 410) und Verbindungsstück (15,115,215) angeordneten Schutzkorb (11,111,211) aufweist; wobei das Verbindungsstück (15,115,215) zur Verbindung des Endstücks (13,113) mit der Hülse (12,112) dient und einen durch einen umlaufenden Absatz (18,118) begrenzten, in Relation zum Innendurchmesser des Schutzkorbs (11,111,211) erweiterten Innendurchmesser aufweist, wobei der umlaufende Absatz (18,118) entweder eine Auflage für ein Dichtmittel (21) darstellt und/oder als eine umlaufende Dichtlippe (27) ausgestaltet ist; wobei der Schutzkorb (11,111,211) mindestens einen orthogonal zur axialen Tauchrohrachse angeordneten Durchbruch (16, 116) aufweist, so dass das im Betrieb im Schutzkorb (11,111,211) angeordnete Sensorelement (5) in direkten Kontakt mit einem Messmedium (4) bringbar ist; wobei alle im Betrieb mit dem Messmedium (4) in Kontakt stehenden Flächen und Kanten des Tauchrohrs glatt und abgerundet ausgestaltet sind; und wobei die durch den Zapfen (10, 110, 210, 310, 410) begrenzte Innenfläche des Schutzkorbs (11, 111, 211) in mindestens eine Richtung nach aussen abfallend ausgestaltet ist.

2. Tauchrohr nach Anspruch 1, **dadurch gekennzeichnet, dass** die Hülse (12,112) und das Endstück (13,113) stoffschlüssig miteinander verbunden sind.

3. Tauchrohr nach einem der Ansprüche 1 oder 2, **dadurch gekennzeichnet, dass** der Aussendurchmesser des dem Endstück (13) zugewandten Hülsenende (22) in etwa dem Innendurchmesser des Verbindungsstücks (15, 115, 215) entspricht.

4. Tauchrohr nach Anspruch 3, **dadurch gekennzeichnet, dass** das gegen das Endstück (13) gerichtete Hülsenende (22) zusammen mit dem im Verbindungsstück (115, 215) ausgebildeten umlaufenden Absatz eine Aufnahme für ein Dichtmittel darstellen.

5. Tauchrohr nach einem der Ansprüche 1 bis 2, **dadurch gekennzeichnet, dass** das dem Endstück zugewandte Hülsenende (19) einen im Vergleich zum dem Endstück abgewandten Ende der Hülse (12) vergrösserten Innendurchmesser aufweist, welcher in etwa dem Innendurchmesser des Verbindungsstücks (15) entspricht.

6. Tauchrohr nach Anspruch 5, **dadurch gekennzeichnet, dass** das Tauchrohr ein teilweise im Hülsenende (19) und teilweise im Verbindungsstück (15) angeordnete Innenhülse (14) aufweist.

7. Tauchrohr nach einem der Ansprüche 5 oder 6, **dadurch gekennzeichnet, dass** das gegen das Endstück (13) gerichtete Ende der Innenhülse (14) zusammen mit dem im Verbindungsstück (15) ausgebildeten umlaufenden Absatz (18) eine Aufnahme (20) für ein Dichtmittel (21) darstellen.

8. Tauchrohr nach einem der Ansprüche 1 oder 7, **dadurch gekennzeichnet, dass** das freie Ende der Dichtlippe (27) als scharfe Kante ausgestaltet ist, und dass zwischen der Dichtlippe (27) und einer im Tauchrohr angeordneten Messsonde ein Freistellwinkel α ,mit α > 0°, ausgebildet ist.

9. Messarmatur mit einem Tauchrohr nach einem der Ansprüche 1 bis 8 und einer im Tauchrohr austauschbar angeordneten Messsonde.

## Claims

1. Immersion tube serving to hold a measuring probe of a type where a sensor element (5) is arranged at the end of the measuring probe; wherein the immersion tube comprises a sleeve (12, 112) and an end piece (13, 113), the latter comprising substantially a plug (10, 110, 210, 310, 410), a connector piece (15, 115, 215), and a protector basket (11, 111, 211) arranged between the plug (10, 110, 210, 310, 410) and the connector piece (15, 115, 215); wherein the connector piece (15, 115, 215) serves to connect the end piece (13, 113) to the sleeve (12, 112) and has an internal diameter that is enlarged in relation to the internal diameter of the protector basket (11, 111, 211), said enlarged internal diameter ending at a circular step (18, 118); wherein said circular step (18, 118) can either serve as a seat for a sealing means (21) and/or can be configured as a circular sealing lip (27);wherein the protector basket (11, 111, 211) has at least one breakthrough opening (16, 116) arranged perpendicular to the longitudinal axis of the immersion tube, whereby the sensor element (5) which in operation is located in the protector basket (11, 111, 211) can be brought into direct contact with a measurement medium (4); wherein all surfaces and edges of the immersion tube which during operation are exposed to the measurement medium (4) are smooth and rounded, and wherein the internal surface of the protector basket (11, 111, 211) which borders on the plug (10, 110, 210, 310, 410) is shaped so that it slopes downward towards the outside in at least one direction.

2. Immersion tube according to claim 1, **characterized in that** the sleeve (12, 112) and the end piece (13, 113) are joined by an integral material connection.

3. Immersion tube according to one of the claims 1 or 2, **characterized in that** the outside diameter of the sleeve ending (22) that faces towards the end piece (13) is about equal to the internal diameter of the connector piece (15, 115, 215).

4. Immersion tube according to claim 3, **characterized in that** the sleeve ending (22) that faces towards the end piece (13) together with the circular step that is formed in the connector piece (115, 215) represents a seat for a sealing means.

5. Immersion tube according to one of the claims 1 to 2, **characterized in that** the sleeve ending (19) that faces towards the end piece has an enlarged internal diameter in comparison to the end of the sleeve (12) that faces away from the end piece and said enlarged internal diameter is about equal to the internal diameter of the connector piece (15).

6. Immersion tube according to claim 5, **characterized in that** the immersion tube comprises an internal sleeve (14) which is arranged in part inside the sleeve ending (19) and in part inside the connector piece (15).

7. Immersion tube according to one of the claims 5 or 6, **characterized in that** the end of the internal sleeve (14) which faces towards the end piece (13) together with the circular step (18) that is formed inside the connector piece (15) represents a seat (20) for a sealing means (21).

8. Immersion tube according to one of the claims 1 or 7, **characterized in that** the free end of the sealing lip (27) is configured as a sharp edge, and that the sealing lip (27) meets a measuring probe seated in the immersion tube at a clearance angle α > 0°.

9. Measuring probe housing with an immersion tube according to one of the claims 1 to 8 and with a measuring probe arranged interchangeably in the immersion tube.

## Revendications

1. Tube plongeur destiné à accueillir une sonde de mesure, avec un élément de détection terminal (5) ; dans lequel le tube plongeur comporte une gaine (12, 112) et une pièce terminale (13, 113) comportant essentiellement un tenon (10, 110, 210, 310, 410), une pièce d'assemblage (15, 115, 215) et un panier de protection (11, 111, 211) disposé entre le tenon (10, 110, 210, 310, 410) et la pièce d'assemblage (15, 115, 215) ; dans lequel la pièce d'assemblage (15, 115, 215) sert à relier la pièce terminale (13, 113) avec la gaine (12, 112) et présente un diamètre intérieur limité par un talon périphérique (18, 118) et élargi par rapport au diamètre intérieur du panier de protection (11, 111, 211), dans lequel le talon périphérique (18, 118) constitue un appui pour un moyen d'étanchéité (21) et/ou est conçu comme une lèvre d'étanchéité périphérique (27) ; dans lequel le panier de protection (11, 111, 211) comporte au moins une percée (16, 116) orthogonale à l'axe axial du tube plongeur, de sorte que l'élément de détection (5) disposé dans le panier de protection (11, 111, 211) pendant le fonctionnement peut être mis en contact direct avec un média de mesure (4) ; dans lequel toutes les surfaces et tous les bords du tube plongeur se trouvant en contact avec le média de mesure (4) pendant le fonctionnement sont conçus lisses et arrondis ; et dans lequel la surface intérieure du panier de protection (11, 111, 211) qui est délimitée par le tenon (10, 110, 210, 310, 410) est conçue de façon à s'incliner vers l'extérieur dans au moins une direction.

2. Tube plongeur selon la revendication 1, **caractérisé en ce que** la gaine (12, 112) et la pièce terminale (13, 113) sont reliées entre elles par liaison de matière.

3. Tube plongeur selon la revendication 1 ou 2, **caractérisé en ce que** le diamètre extérieur de l'extrémité de gaine (22) tournée vers la pièce terminale (13) correspond à peu près au diamètre intérieur de la pièce d'assemblage (15, 115, 215).

4. Tube plongeur selon la revendication 3, **caractérisé en ce que** l'extrémité de gaine (22) orientée contre la pièce terminale (13) forme, ensemble avec le talon périphérique formé dans la pièce d'assemblage (115, 215), une admission pour un moyen d'étanchéité.

5. Tube plongeur selon l'une des revendications 1 à 2, **caractérisé en ce que** l'extrémité de gaine (19) tournée vers la pièce terminale présente un diamètre intérieur agrandi par rapport à l'extrémité de la gaine (12) qui est détournée de la pièce terminale, correspondant à peu près au diamètre intérieur de la pièce d'assemblage (15).

6. Tube plongeur selon la revendication 5, **caractérisé en ce que** le tube plongeur comporte une gaine intérieure (14) disposée partiellement dans l'extrémité de gaine (19) et partiellement dans la pièce d'assemblage (15).

7. Tube plongeur selon l'une des revendications 5 ou 6, **caractérisé en ce que** l'extrémité de la gaine intérieure (14) qui est orientée contre la pièce terminale (13) forme une admission (20) pour un moyen d'étanchéité (21), ensemble avec le talon périphérique (18) formé dans la pièce d'assemblage (15).

8. Tube plongeur selon l'une des revendications 1 ou 7, **caractérisé en ce que** l'extrémité libre de la lèvre d'étanchéité (27) est conçue comme une arête vive, et **en ce qu'**un angle de dépouille α, avec α > 0°, entre la lèvre d'étanchéité (27) et une sonde de mesure disposée dans le tube plongeur.

9. Armature de mesure avec un tube plongeur selon l'une des revendications 1 à 8, et une sonde de mesure remplaçable, disposée dans le tube plongeur.
